# FASCICULE DE BREVET EUROPEEN

(11) **EP 1 209 976 B1**
(45) Date de publication et mention de la délivrance du brevet: **25.06.2003**
(21) Numéro de dépôt: 00960812.6
(22) Date de dépôt: 07.09.2000
(51) Int. Cl.: A01N 47/02, A01N 43/56

(54) **PROCEDE DE LUTTE CONTRE LES INSECTES DU SOL AVEC DES PHENYL-PYRAZOLES**
BEKÄMPFUNG VON BODENINSEKTEN MIT PHENYLPYRAZOLEN
METHOD FOR FIGHTING SOIL INSECTS WITH PHENYL-PYRAZOLES

(30) Priorité: 07.09.1999 FR 9911312
(43) Date de publication de la demande: 05.06.2002
(73) Titulaire: Bayer CropScience S.A., 69009 Lyon (FR)
(72) Inventeur: GAULLIARD, Jean-Michel, F-69250 Montanay (FR); SEGAUD, Christian, F-69370 Saint Didier au Mont d'Or (FR)
(74) Mandataire: Mérigeault, Shona
(86) Numéro de dépôt international: FR0002460
(87) Numéro de publication internationale: WO01017354

(56) Documents cités:
- EP-A- 0 295 117
- WO-A-97/04654
- US-A- 4 834 977
- DATABASE CROPU [en ligne] retrieved from STN-INTERNATIONAL, accession no. 96-88693 CROPU XP002135102 & JP 08 175910 A (SUMITOMO) 9 juillet 1996 (1996-07-09)
- H.H.TOBA ET AL.: "Evaluation of Baiting Techniques for Sampling Wireworms (Coleoptera: Elateridae) Infesting Wheat in Washington" JOURNAL OF ECONOMIC ENTOMOLOGY., vol. 76, no. 4, août 1983 (1983-08), pages 850-855, XP002135101 ENTOMOLOGICAL SOCIETY OF AMERICA. COLLEGE PARK, MARYLAND., US ISSN: 0022-0493
- DATABASE CHEMABS [en ligne] CHEMICAL ABSTRACTS SERVICE, COLUMBUS, OHIO, US; retrieved from STN-INTERNATIONAL, accession no. 97:87063 CA XP002135103 & JP 57 062201 A (SUMITOMO) 15 avril 1982 (1982-04-15)
- DATABASE WPI Section Ch, Week 198928 Derwent Publications Ltd., London, GB; Class C03, AN 1989-204057 XP002135105 & JP 01 143806 A (SUMITOMO CHEM IND KK), 6 juin 1989 (1989-06-06)
- DATABASE CABA [en ligne] A CHABERT ET AL.: "Impact of maize soil insecticides on wireworm populations (Agriotes sp., Coleoptera, Elateridae)" retrieved from STN-INTERNATIONAL, accession no. 97:101520 CABI XP002135104 & INTERNATIONAL CONFERENCE ON PESTS IN AGRICULTURE, 6-8 JANUARY 1997, AT LE CORUM, MONTPELLIER, FRANCE, vol. 3, 1997, pages 1021-1028,

## Description

La présente invention a pour objet de nouvelles compositions destinées à la lutte contre les insectes du sol en leur diverses formes de développement, et notamment des compositions utiles dans la lutte contre les taupins. L'invention porte également sur un procédé de lutte mettant en oeuvre lesdites compositions.

On connaît, notamment par les demandes de brevet EP 295117, WO 87/3781, 93/6089, 94/21606 des composés insecticides de type phényl-pyrazole utilisables dans la lutte contre les insectes. Les demandes de brevets EP 295117 et 836386 mentionnent également des compositions comprenant de 0,01% à 5% de telles matières actives.

La demande de brevet japonais n°08-175910 divulgue un appât empoisonné pour la lutte contre les fourmis et comprenant du fipronil comme matière active insecticide ainsi qu'un support usuel pour de tels appâts, par exemple à base de céréales, de sucres, d'huiles, de substances animales, d'arômes, d'agents liants, de solvants, d'agents gélifiants, et éventuellement d'agents conservateurs ou antioxydants. Un exemple d'un tel appât est décrit et comprend 0,01 partie de fipronil, 30 parties de farine de froment, 20 parties de poudre de chrysalide, 10 parties d'huile d'arachide, 20 parties de sucre en poudre et 19,99 parties de dextrine.

La demande de brevet international publiée sous le n°97/04654 (D2) a pour objet des associations de composés insecticides de type oxime-carbamate, tels que l'aldicarb ou l'aldoxycarb, et de composés à groupe pyrazole, pyrrole ou phénylpyrazole, ainsi que des compositions agrochimiques comprenant de telles associations. Ces compositions sont décrites de manières très générales sans mention d'appât ni de support à base de farine végétale.

Le document indexé XP-002135101 rapporte une étude concernant l'efficacité d'appâts attractifs constitués de différentes farines mais exempts de toute matière active insecticide. Cette étude a été réalisée durant plusieurs mois en vue de dénombrer le nombre de taupins en un endroit donné. Les appâts ayant donnés les meilleurs résultats avaient été imprégnés d'eau puis recouverts d'une feuille de polyéthylène et ont été utilisés durant trois semaines au mois d'avril de l'année d'évaluation.

Le document XP-002135103 divulgue un appât insecticide pour la lutte contre des noctuelles de type *Prodenia litura* et qui contient 5 parties d'un composé insecticide qui est le 1-naphtyl N-methylcarbamate encore appelé carbaryl, 29 parties de son de riz, 29 parties de farine, 6 parties de mélasse, 35,5 parties de craie et 0,5 partie de CM cellulose.

Le document XP-002135105 décrit un appât empoisonné sous forme de comprimés et qui contient de 0,01 à 2% d'au moins un composé analogue d'hormone juvénile d'insecte ou inhibiteur de la formation de la chitine des insectes, de la cellulose micro-cristalline et de la farine de céréale, ainsi que 0,1à 10% en poids d'huile végétale et 10 à 40% en poids de sucre. Cet appât est destiné à la lutte contre les cafards, les fourmis et les carabes.

Le brevet états-unien n°4 834 977 concerne un appât empoisonné comprenant essentiellement au moins un composé insecticide choisi parmi les composés de types organophosphoré, carbamate et pyréthrinoïde et encapsulé au moyen d'un matériau filmogène conventionnel, et de la cellulose micro-cristalline ainsi que des poudres de produits végétaux.

Le document XP-002135104 rapporte une étude d'efficacité de différents insecticides appliqués de manières différentes en culture de maïs pour la lutte contre des taupins. L'utilisation de pièges alimentaires exempts de toute matière active insecticide pour le dénombrement des populations de taupins est évoquée dans ce document mais sans qu'aucune information de soit donnée quant à la composition de ces pièges alimentaires.

Les taupins constituent une famille d'insectes particulièrement nuisibles pour certaines cultures, et plus particulièrement pour les cultures de maïs, betterave, tournesol, pommes de terre et colza. Leur caractère nuisible est d'autant plus marqué que les formes vers des taupins peuvent rester pendant de très longues périodes dans le sol, allant jusqu'à 5 ans.

On a bien proposé des appâts pour diverses sortes d'insectes, ainsi que des formules consommables par ingestion, mais ces formules ne sont pas nécessairement actives pour toutes les sortes d'insectes, et il reste le besoin de trouver des formes ou formulations insecticides particulièrement efficaces pour les applications les plus diverses, et notamment pour la lutte contre les taupins.

En outre, en ce qui concerne les insecticides appliqués sur ou dans le sol, il est désirable de trouver des conditions et formulations permettant d'obtenir une bonne efficacité à des doses aussi basses que possible.

Un but de l'invention est de remédier, en tout ou en partie, à ces difficultés.

Un autre but de l'invention est de proposer des compositions avantageuses et efficaces pour lutter contre les insectes non grégaires.

Un autre but de l'invention est de proposer des compositions avantageuses et efficaces pour lutter contre les insectes du sol notamment les taupins, et plus particulièrement les taupins à l'état de vers.

Un autre but de l'invention est de fournir des compositions comprenant au moins une matière active insecticide de type phényl-pyrazole et applicables commodément sur ou dans le sol.

Un autre but de l'invention est de proposer des compositions insecticides ayant de bonnes performances malgré des doses basses d'utilisation.

Il a maintenant été trouvé que ces buts pouvaient être atteints, en totalité ou en partie, au moyen des compositions et du procédé de lutte selon l'invention qui sont décrits en détail ci-après. On précise que les pourcentages indiqués dans le présent texte sont des pourcentages poids/poids, sauf indication contraire spécifique.

La présente invention a donc pour objet, en premier lieu, des compositions insecticides comprenant :
- a) entre 0,001 et 5 %, de préférence entre 0,05 et 1% et encore plus avantageusement entre 0,05 et 0,5 % d'un composé de formule (I) : 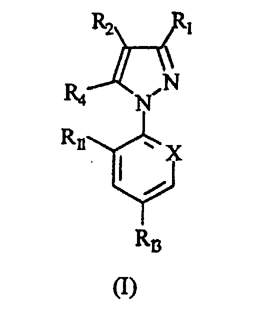 dans laquelle :
   R₁ est un atome d'halogène ou un groupe CN ou un groupe méthyle ou un groupe CH₃CO ;
   R₂ est S(O)ₙR₃;
   R₃ est alkyl ou haloalkyl;
   R₄ représente un atome d'hydrogène ou d'halogène; ou un radical NR₅R₆, S(O)ₘR₇, C(O)R₇ or C(O)O-R₇, alkyl, haloalkyl ou OR₈ ou un radical -N=C(R₉)(R₁₀);
   R₅ et R₆ représentent indépendamment l'atome d'hydrogène ou un radical alkyl, haloalkyl, C(O)alkyl, S(O)ᵣCF₃; ou R₅ et R₆ peuvent former ensemble un radical alkylene divalent qui peut être interrompu par un ou deux hétéroatomes divalents, tels que l'oxygène ou le soufre;
   R₇ représente un radical alkyl ou haloalkyl;
   R₈ représente un radical alkyl, haloalkyl ou un atome d'hydrogène;
   R₉ représente un radical alkyl ou un atome d'hydrogène;
   R₁₀ représente un groupe phenyl ou heteroaryl éventuellement substitué par un ou plusieurs atomes d'halogène ou groupes tels que OH, -O-alkyl, -S-alkyl, cyano, ou alkyl;
   X représente un atome d'azote trivalent ou un radical C-R₁₂, les trois autres valences de l'atome de carbone faisant partie du cycle aromatique;
   R₁₁et R₁₂ représentent, indépendamment l'un de l'autre, un atome d'hydrogène ou d'halogène;
   R₁₃ représente un atome d'halogène ou un groupe haloalkyl, haloalkoxy, S(O)_{q}CF₃ ou SF₅;
   m, n, q, r représentent, indépendamment l'un de l'autre, un nombre entier égal à 0,1 ou 2;
   sous réserve que, lorsque R₁ est méthyle, alors R₃ est haloalkyl, R₄ est NH₂, R₁₁ est Cl, R₁₃ est CF₃, et X est N ;
- b) entre 0,05 et 10%, de préférence entre 0,1 et 5 % d'un (ou plusieurs) agent rétenteur d'humidité, de préférence un agent rétenteur d'humidité de nature organique ; et
- c) entre 40 et 99 %, de préférence entre 50 et 98 % (et plus préférentiellement entre 70 et 97 %) de farine végétale.

Les radicaux alkyle de la définition de la formule (I) comprennent généralement de 1 à 6 atomes de carbone. Le cycle formé par le radical alkylène divalent représentant R₅ et R₆ ainsi que par l'atome d'azote auxquels R₅ et R₆ sont rattachés, est généralement un cycle à 5, 6 ou 7 chaînons.

Le composé de formule (I) peut être préparé selon un des procédés décrits dans les demandes de brevet WO 87/3781, 93/6089, 94/21606, EP 295117 ou encore par un autre procédé compris dans les connaissances générales de l'homme du métier compétent en synthèse chimique. Ce composé est également désigné dans le présent texte par le terme de matière active.

Parmi les farines végétales utilisables, on peut citer les farines issues du broyage de grains de céréales comme le blé, l'orge, le seigle, le triticale, l'avoine, ou aussi le riz, le sorgho, le soja, le maïs, la farine préférée étant celle à base de maïs. Un mélange de ces farines végétales est également envisageable dans le cadre de la présente invention.

Parmi les agents rétenteurs d'humidité de nature organique, on peut citer les dérivés hydrophiles macromoléculaires d'origine végétale, et notamment les dérivés hydrophiles cellulosiques, et plus particulièrement la cellulose mais aussi un ou plusieurs agents de désintégration. Il peut être avantageux d'utiliser ces composés en particulier lorsque l'on utilise dans les granulés des farines telles que les farines de blé dur. Des agents de désintégration incluent: l'amidon, le carboxyméthyl amidon de sodium, la cellulose telle que la cellulose microcristalline; des celluloses modifiées telles que la carboxyméthylcellulose de sodium; la bentonite, le silicate d'aluminium et de magnésium; le polynaphtalènesulfonate de sodium, le dodécylbenzènesulfonate de sodium, le dioctylsulfosuccinate de sodium, le sulfonate de lignine; un dérivé de la saccharide tel que le lactose, le fructose, le sucrose, le manitol, le dextrose; un dérivé réticulé de la polyvinylpyrrolidone. Lorsque l'on utilise un agent de désintégration, la composition selon l'invention peut contenir de 0,5 à 30% et, de préférence, de 1 à 20% en poids de la substance sèche, du ou des dits agents.

Selon une variante de la composition selon l'invention, la composition comprend également de 3 à 30 %, de préférence de 4 à 20% de sucres. Les sucres sont choisis notamment parmi les mono-, oligo- ou poly-organosaccharides, spécialement parmi le saccharose, le lactose, le fructose, le dextrose, le glucose ou encore la mélasse ou le miel.

Les compositions objet de l'invention peuvent également comprendre un agent conservateur prévenant la dégradation des farines, tel que le benzoate de sodium, la 1,2-benzisothiazoline-3-one, l'acide benzoïque, l'acide para hydroxybenzoïque et ses dérivés esters et sels alcalins ou alcalino-terreux, notamment le sel de sodium, le 2-phénylphénol et ses sels alcalins ou alcalino-terreux, notamment le sel de sodium, le paranitrophénol.

D'autres additifs peuvent également être inclus tels que des agents colorants ou des agents attractifs pour les nuisibles ou répulsifs pour les oiseaux ou animaux utiles ou à protéger.

D'autres additifs de formulations peuvent être utilisés comme des agents collants, agglomérants, appétants, agglutinants, gélifiants, gonflants, antiadhérants et autres.

Une classe préférée de composés de formule (I) comprend les composés tels que R₁ est CN, et/ou R₃ est haloalkyl, et/ou R₄ est NH₂, et/ou R₁₁ et R₁₂ sont indépendamment l'un de l'autre un atome d'halogène, et/ou R₁₃ est haloalkyl.

Selon une variante particulièrement avantageuse de l'invention, le composé de formule (I) mis en oeuvre dans l'invention est le 5-amino-3-cyano-1-[2,6-dichloro-4-(trifluoromethyl)phenyl]-4-[(trifluoromethyl)sulfinyl]-1*H*-pyrazole, auquel il est fait référence dans les exemples sous le terme de "fipronil".

Les formulations selon l'invention sont généralement sous forme de granulés. La taille des granulés est avantageusement comprise entre 0,1 mm et 3 cm, de préférence entre 0,5 et 4 mm. Ces granulés sont avantageusement insolubles dans l'eau (dans le sens où ils résistent à la désintégration par l'eau).

Les compositions selon l'invention peuvent être préparées par simple mélange des divers constituants, de préférence par extrusion ou compression à froid ou à chaud selon toute technique de granulation ou pastillage connue en soit. Pour l'obtention de tels granulés, on se reportera aisément par exemple à la demande de brevet européen publiée sous le numéro EP 0575838 et/ou à d'autres techniques, par exemple d'extrusion, connues de l'homme du métier.

L'invention concerne également un procédé de protection des cultures contre les insectes, notamment les taupins, caractérisé en ce que l'on applique sur ou dans le sol (de préférence dans le sol) de la zone devant être cultivée une quantité efficace d'une composition sous forme de granulés de taille comprise entre 0,2 mm et 2 cm comprenant une matière active choisie dans le groupe constitué par les produits de formule I, l'imidacloprid, l'acetamiprid, le nitenpyram et le thiamethoxam. Les produits de formule I sont préférés.

L'invention concerne ainsi plus particulièrement un procédé de protection des cultures de céréales, de préférence de maïs, ou de betteraves ou de tournesol ou de pomme de terre ou de colza. L'application des formulations selon l'invention a lieu avantageusement avant le semis de la dite culture, ou simultanément à ce semis.

L'invention concerne également un procédé de lutte contre les insectes, notamment de taupins, caractérisé en ce que l'on applique sur ou dans le sol (de préférence dans le sol) où ils se trouvent ou sont susceptibles de se trouver une quantité efficace d'une des compositions selon l'invention.

Comme quantité efficace, on utilise souvent des quantités de composition correspondant à une dose de composé de formule (I) comprises entre 1 et 50 g/ha, de préférence entre 3 et 40 g/ha.

Une caractéristique particulière du procédé de lutte contre les insectes selon l'invention consiste en l'application, sur ou dans le sol, d'une composition apportant une dose non létale par contact mais létale par ingestion.

Autrement dit, dans le cas particulier des taupins, le procédé consiste à tuer les taupins par application d'une dose non létale par contact mais létale par ingestion. Une hypothèse de la bonne efficacité du procédé de traitement selon l'invention, permettant de diminuer fortement les doses d'application de composés de formule I notamment, est basée sur le fait que l'appât selon l'invention ayant entraîné la mort d'un taupin, ce dernier peut lui même servir d'appât pour d'autres taupins, qui ingèrent donc également un produit (taupin mort) contenant l'insecticide.

Au sens du présent texte, les mots insecticide et insecte doivent être pris dans leur acception courante large et non dans leur acception strictement scientifique (zoologique). C'est ainsi que par le terme insecte, on entend tout animal de très petit tels que arthropodes (insectes au sens strict et zoologique, arachnides, myriapodes) et nématodes.

Comme insectes du sol contre lesquels l'invention est particulièrement efficace, on peut citer par exemple :
Les **Coléoptères** (wireworms (*Agriotes* spp.), false wiremorms, white grabs) tels que par exemple :
   *Agriotes lineatus* (taupin européen, Elateridae),
   *Agriotes sordidus* (taupin européen, Elateridae),
   *Agriotes obscurus* (taupin européen, Elateridae),
   *Agriotes sputator* (taupin européen, Elateridae),
   *Athous spp.* (Elateridae),
   *Atomaria linearis* (cryptophagidae)
   *Melolontha* spp. (vers blanc, scarabaeidae),
   *Bothynoderes,*
   *Limonius* spp. (taupin US),
   *Melanotus* spp. (taupin US),
   *Diabrotica* spp. (cornrootworms, crysomelidae)
   *Tanymecus pallidus* (beet leaf weevil, curculionidae).
   Les **Lépidoptères** (Noctuelles) tels que :
   *Autographa* spp., *Mamestra* spp., *Agrotis* spp. (Cutworms, vers gris), *Euxoa* spp. (Cutworms, vers gris), *Spodoptera* spp. (*Spodoptera exigua*, *Spodoptera littoralis*).
   Les **Diptères** (tels que *Tipula* spp.).
   Les **Myriapodes** (Myriapoda) :
      - *Diplopoda* = Millipedes,
      - Centipede.

Parmi les taupins sol contre lesquels l'invention est particulièrement efficace, on peut citer *Agriotes* spp., *Athous* spp., *Limonius* spp.

Les granulés selon l'invention sont avantageusement insérés dans le sol à une profondeur comprise entre 1 et 5 cm.

Les compositions selon l'invention sont particulièrement avantageuses en ce qu'elles permettent l'utilisation de doses plus basses de produit actif que les compositions semblables connues.

Les exemples suivants illustrent l'invention, sans pour autant constituer une limitation de celle-ci. Dans ces exemples, le composé de formule (I) utilisé est le fipronil.

### Exemple 1 :

Une surface de 0,1 ha est semée avec du maïs à raison de 8000 graines environ, non traitées. Cette surface est divisée en parcelles de 40 m2.

En même temps que le semis, on incorpore au sol, dans la raie de semis des granulés de 2 mm contenant une composition constituée de :
0,25% de fipronil,
93,5% de farine de maïs,
2% de cellulose,
4% de lactose,
0,2% de paranitrophénol,
0,05% de pigment bleu 15.3.

Les quantités de granulés ainsi épandues varient de 2,5 à 10 kg par hectare. Des parcelles non traitées sont conservées pour servir de témoin et vérifier l'importance des dégâts causés par les insectes. De même, des parcelles seront traitées avec un insecticide commercial réputé efficace et appelé référence. Chaque modalité est répétée quatre fois.

20 jours après semis environ, on compte les plants de maïs ayant levé,

Sur la localité de St Hilaire (30), 22 jours après le semis, on observe dans le sillon des 4 parcelles non traitées 19 plants pour 10 mètres de sillon. Dans les parcelles traitées selon l'invention avec la doses de Fipronil de 6 g par hectare on observe 49 plants par 10 mètres de sillon.

Avec la dose de Fipronil de 12,5 g par hectare on observe 48 à 50,5 plants par 10 mètres de sillon.

Avec la dose de Fipronil de 25 g par hectare on observe 45,5 à 51,3 plants par 10 mètres de sillon.

Avec la dose de Fipronil de 50 g par hectare on observe 49 plants par 10 mètres de sillon.

Pour obtenir le même résultat avec un granulé classique (support argile), il faut apporter 200 g de fipronil par hectare.

Le sol est creusé et gratté pour capturer et identifier les insectes responsables des dégâts, on observe pour le témoin non traité une présence importante de larves de taupins du genre Agriotes, en particulier Agriotes sordidus.

### Exemple 2 :

Une surface de 1 ha est semée avec du maïs à raison de 98100 graines environ, non traitées.Cette surface est divisée en parcelles de 27 m2.

En même temps que le semis, on incorpore au sol, dans la raie de semis des granulés de 2 mm contenant une composition constituée de :
0,25% de fipronil,
93,5% de farine de maïs,
2% de cellulose,
4% de lactose,
0,2% de paranitrophénol,
0,05% de pigment bleu 15.3.

Les quantités de granulés ainsi épandues varient de 2,5 à 10 kg par hectare. Des parcelles non traitées sont conservées pour servir de témoin et vérifier l'importance des dégâts causés par les insectes. De même des parcelles seront traitées avec un insecticide commercial réputé efficace et appelé référence. Chaque modalité est répétée quatre fois.

50 jours après semis environ, on compte les plants de maïs ayant levé.

Sur la localité de Beaufort (62), 50 jours après le semis, on observe dans le sillon des 4 parcelles non traitées 30 plants pour 10 mètres de sillon. Dans les parcelles traitées selon l'invention avec la doses de Fipronil de 6 g par hectare on observe 40 plants par 10 mètres de sillon.

Avec la doses de Fipronil de 12,5 g par hectare on observe 43 à 46 plants par 10 mètres de sillon.

Avec la doses de Fipronil de 25 g par hectare on observe 44,5 à 50 plants par 10 mètres de sillon.

Avec la doses de Fipronil de 50 g par hectare on observe 49,8 plants par 10 mètres de sillon.

Pour obtenir le même résultat (52 plants pour 10 mètres ) avec un granulé classique (support argile) il faut apporter 200 g de fipronil par hectare.

Le sol est creusé et gratté pour capturer et identifier les insectes responsables des dégâts, on observe pour le témoin non traité une présence importante de larves de taupins du genre Agriotes, en particulier Agriotes lineatus.

### Exemple 3 : Essais d'efficacité des granulés appâts selon l'invention sur culture de pomme de terre.

En même temps que le semis, on incorpore au sol, dans la raie de semis des granulés selon l'invention constitués de :
12,5 g/kg de fipronil (à partir d'une SC à 500g/l de fipronil),
945,5 g/kg de farine a) de **maïs (granulés A)** ou b) de **riz (granulés B),**
40 g/kg de lactose,
2 g/kg de paranitrophénol.

On a comparé l'efficacité contre Agriotes (taupins) 90 jours après le semis des deux granulés A et B ci-dessus utilisés aux doses de 5 et 2,5 g de fipronil par hectare et du même fipronil utilisé par pulvérisation aux doses de 50 et 25 g/ha (à partir de Regent® 800WG)(composé C).

On observe alors les résultats suivants exprimés en nombre de trous par 10 tubercules (=N) :

| Produit | A | A | B | B | C | C | témoin* |
|---|---|---|---|---|---|---|---|
| Dose (g/ha) | 2,5 | 5 | 2,5 | 5 | 25 | 50 | - |
| N | 6 | 1 | 7 | 3 | 6 | 1 | 14 |

| | | | | | | | |
|---|---|---|---|---|---|---|---|
| * témoin non traité. | | | | | | | |

Ce résultat montre bien le bon contrôle des taupins obtenu par les granulés selon l'invention qui donnent le même résultat que le Regent® 800WG **mais avec une dose diminuée d'un facteur 10**.

## Revendications

1. Compositions insecticides comprenant :
- a) entre 0,001 et 5 %, de préférence entre 0,05 et 1% et encore plus avantageusement entre 0,05 et 0,5 % d'un composé de formule (I) : 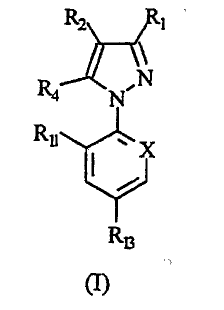 dans laquelle :
R₁ est un atome d'halogène ou un groupe CN ou un groupe méthyle ou un groupe CH₃CO ;
R₂ est S(O)ₙR₃;
R₃ est alkyl ou haloalkyl;
R₄ représente un atome d'hydrogène ou d'halogène; ou un radical NR₅R₆, S(O)ₘR₇, C(O)R₇ or C(O)O-R₇, alkyl, haloalkyl ou OR₈ ou un radical -N=C(R₉)(R₁₀);
R₅ et R₆ représentent indépendamment l'atome d'hydrogène ou un radical alkyl, haloalkyl, C(O)alkyl, S(O)ᵣCF₃; ou R₅ et R₆ peuvent former ensemble un radical alkylene divalent qui peut être interrompu par un ou deux hétéroatomes divalents, tels que l'oxygène ou le soufre;
R₇ représente un radical alkyl ou haloalkyl;
R₈ représente un radical alkyl, haloalkyl ou un atome d'hydrogène;
R₉ représente un radical alkyl ou un atome d'hydrogène;
R₁₀ représente un groupe phenyl ou heteroaryl éventuellement substitué par un ou plusieurs atomes d'halogène ou groupes tels que OH, -O-alkyl, -S-alkyl, cyano, ou alkyl;
x représente un atome d'azote trivalent sur un radical C-R₁₂, les trois autres valences de l'atome carbone faisant partie du cycle aromatique
R₁₁ et R₁₂ représentent, indépendamment l'un de l'autre, un atome d'hydrogène ou d'halogène;
R₁₃ représente un atome d'halogène ou un groupe haloalkyl, haloalkoxy, S(O)_{q}CF₃ ou SF₅;
m, n, q, r représentent, indépendamment l'un de l'autre, un nombre entier égal à 0,1 ou 2;
sous réserve que, lorsque R₁ est méthyle, alors R₃ est haloalkyl, R₄ est NH₂, R₁₁ est Cl, R₁₃ est CF₃, et X est N ;
- b) entre 0,05 et 10%, de préférence entre 0,1 et 5 % d'un (ou plusieurs) agent rétenteur d'humidité, de préférence un agent rétenteur d'humidité de nature organique ; et
- c) entre 40 et 99 %, de préférence entre 50 et 98 % (et plus préférentiellement entre 70 et 97 %) de farine végétale.

2. Compositions insecticides selon la revendication 1 **caractérisée en ce que** les farines sont issues du broyage de grains de céréales comme le blé, l'orge, le seigle, le triticale, l'avoine, ou aussi le riz, le sorgho, le soja, le maïs.

3. Compositions insecticides selon l'une des revendications 1 à 2 **caractérisée en ce que** la farine est une farine de maïs.

4. Compositions insecticides selon l'une des revendications 1 à 3 **caractérisée en ce que** parmi les agents rétenteurs d'humidité de nature organique, on peut citer les dérivés hydrophiles macromoléculaires d'origine végétale, et notamment les dérivés hydrophiles cellulosiques, et plus particulièrement la cellulose.

5. Compositions insecticides selon l'une des revendications 1 à 4 **caractérisée en ce que** la composition comprend également de 3 à 30 %, de préférence de 4 à 20% de sucres.

6. Compositions insecticides selon l'une des revendications 1 à 4 **caractérisée en ce que** les sucres sont choisis notamment parmi les mono-, oligo- ou poly-organosaccharides, spécialement parmi le saccharose, le lactose, le fructose, le dextrose, le glucose ou encore la mélasse ou le miel.

7. Compositions insecticides selon l'une des revendications 1 à 6, **caractérisée en ce qu'**elles comprennent également un agent conservateur prévenant la dégradation des farines choisi parmi le benzoate de sodium, la 1,2-benzisothiazoline-3-one, l'acide benzoïque, l'acide para hydroxybenzoïque et ses dérivés esters et sels alcalins ou alcalino-terreux, notamment le sel de sodium, le 2-phénylphénol et ses sels alcalins ou alcalino-terreux, notamment le sel de sodium, le paranitrophénol.

8. Compositions insecticides selon l'une des revendications 1 à 7, **caractérisée en ce qu'**elles comprennent d'autres additifs tels que des agents colorants ou des agents attractifs pour les nuisibles ou répulsifs pour les oiseaux ou animaux utiles ou à protéger, et/ou d'autres additifs de formulations comme des agents collants, agglomérants, appétants, agglutinants, gélifiants, gonflants, antiadhérants et autres.

9. Compositions insecticides selon l'une des revendications 1 à 8, **caractérisée en ce que** le composé de formule (I) est le 5-amino-3-cyano-1-[2,6-dichloro-4-(trifluoromethyl)phenyl]-4-[(trifluoromethyl)sulfinyl]-1*H*-pyrazole.

10. Compositions insecticides selon l'une des revendications 1 à 9, **caractérisée en ce que** les formulations selon l'invention sont sous forme de granulés, la taille de ces granulés étant avantageusement comprise entre 0,1 mm et 3 cm, de préférence entre 0,5 et 4 mm et **en ce que** ces granulés sont avantageusement insolubles dans l'eau.

11. Procédé de lutte contre les insectes, **caractérisé en ce que** l'on applique sur ou dans le sol (de préférence dans le sol) de la zone devant être cultivée une quantité efficace d'une composition selon l'une des revendications 1 à 10 sous forme de granulés de taille comprise entre 0,2 mm et 2 cm .

12. Procédé de protection des cultures selon la revendication 11 **caractérisé en ce que** l'on emploie un composé de formule I.

13. Procédé selon l'une des revendications 11 ou 12 **caractérisé en ce que** l'on protège les cultures de céréales, de préférence de maïs, ou de betteraves ou de tournesol ou de pomme de terre ou de colza.

14. Procédé selon l'une des revendications 11 à 13 **caractérisé en ce qu'**une quantité efficace d'une des compositions selon l'invention est utilisée pour la lutte contre les insectes, notamment les taupins.

15. Procédé selon l'une des revendications 12 à 14 **caractérisé en ce que** la quantité efficace de composition correspond à une dose de composé de formule (I) comprise entre 1 et 50 g/ha, de préférence entre 3 et 40 g/ha.

16. Procédé de luttes contre les insectes selon les revendications 11-15 qui consiste en l'application, sur ou dans le sol, d'une composition apportant une dose non létale par contact mais létale par ingestion.

17. Procédé selon la revendication 16 applicable aux taupins.

## Claims

1. Insecticidal compositions comprising:
- a) between 0.001 and 5%, preferably between 0.05 and 1% and still more advantageously between 0.05 and 0.5% of a compound of formula (I): 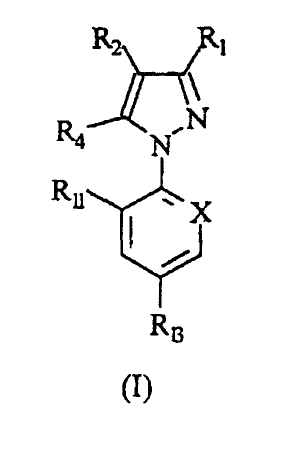 in which:
R₁ is a halogen atom or a CN group or a methyl group or a CH₃CO group;
R₂ is S(O)ₙR₃;
R₃ is alkyl or haloalkyl;
R₄ represents a hydrogen or halogen atom, or an NR₅R₆, S(O)ₘR₇, C(O)R₇ or C(O)O-R₇, alkyl, haloalkyl or OR₈ radical or an -N=C(R₉)(R₁₀) radical;
R₅ and R₆ independently represent a hydrogen atom or an alkyl, haloalkyl, C(O)alkyl or S(O)ᵣCF₃ radical, or R₅ and R₆ can together form a divalent alkylene radical which may be interrupted by one or two divalent heteroatoms such as oxygen or sulphur;
R₇ represents an alkyl or haloalkyl radical;
R₈ represents an alkyl or haloalkyl radical or a hydrogen atom;
R₉ represents an alkyl radical or a hydrogen atom;
R₁₀ represents a phenyl or heteroaryl group optionally substituted with one or more halogen atoms or groups such as OH, -O-alkyl, -S-alkyl, cyano or alkyl;
X represents a trivalent nitrogen atom or a C-R₁₂ radical, the other three valencies of the carbon atom forming part of the aromatic ring;
R₁₁ and R₁₂ represent, independently of each other, a hydrogen or halogen atom;
R₁₃ represents a halogen atom or a haloalkyl, haloalkoxy, S(O)_{q}CF₃ or SF₅ group;
m, n, q, r represent, independently of each other, an integer equal to 0, 1 or 2;
with the proviso that when R₁ is methyl, then R₃ is haloalkyl, R₄ is NH₂, R₁₁ is Cl, R₁₃ is CF₃ and X is N;
- b) between 0.05 and 10%, preferably between 0.1 and 5% of one (or more) moisture-retaining agents, preferably a moisture-retaining agent of an organic nature; and
- c) between 40 and 99%, preferably between 50 and 98% (and more preferably between 70 and 97%) of vegetable meal.

2. Insecticidal compositions according to Claim 1, **characterized in that** the meals are derived from the grinding of cereal grains such as wheat, barley, rye, triticale, oats, or also rice, sorghum, soyabean, maize.

3. Insecticidal compositions according to either of Claims 1 and 2, **characterized in that** the meal is a maize meal.

4. Insecticidal compositions according to one of Claims 1 to 3, **characterized in that** among the moisture-retaining agents of an organic nature, there may be mentioned macromolecular hydrophilic derivatives of plant origin, and in particular cellulosic hydrophilic derivatives, and more particularly cellulose.

5. Insecticidal compositions according to one of Claims 1 to 4, **characterized in that** the composition also comprises from 3 to 30%, preferably from 4 to 20% of sugars.

6. Insecticidal compositions according to one of Claims 1 to 4, **characterized in that** the sugars are chosen in particular from mono-, oligo- or polyorganosaccharides, especially from sucrose, lactose, fructose, dextrose, glucose or alternatively molasses or honey.

7. Insecticidal compositions according to one of Claims 1 to 6, **characterized in that** they also comprise a preservative preventing the degradation of the meals, chosen from sodium benzoate, 1,2-benzisothiazolin-3-one, benzoic acid, parahydroxybenzoic acid and its ester derivatives and its alkali or alkaline-earth metal salts, in particular the sodium salt, 2-phenylphenol and its alkali or alkaline-earth metal salts, in particular the sodium salt, paranitrophenol.

8. Insecticidal compositions according to one of Claims 1 to 7, **characterized in that** they comprise other additives such as colourings or attractants for pests or repellants for birds or animals which are useful or which should be protected, and/or other formulation additives such as binding, agglomerating, appetite-enhancing, agglutinating, gelling, swelling and antiadherent agents and the like.

9. Insecticidal compositions according to one of Claims 1 to 8, **characterized in that** the compound of formula (I) is 5-amino-3-cyano-1-[2,6-dichloro-4-(trifluoromethyl)phenyl]-4-[(trifluoromethyl)sulphinyl]-1*H*-pyrazole.

10. Insecticidal compositions according to one of Claims 1 to 9, **characterized in that** the formulations according to the invention are in the form of granules, the size of these granules being advantageously between 0.1 mm and 3 cm, preferably between 0.5 and 4 mm and **in that** these granules are advantageously insoluble in water.

11. Method of controlling insects, **characterized in that** an effective quantity of a composition according to one of Claims 1 to 10 in the form of granules having a size of between 0.2 mm and 2 cm is applied over or into the soil (preferably into the soil) of the area which has to be cultivated.

12. Method of protecting crops according to Claim 11, **characterized in that** a compound of formula I is used.

13. Method according to either of Claims 11 and 12, **characterized in that** cereal, preferably maize or beet or sunflower or potato or rape, crops are protected.

14. Method according to one of Claims 11 to 13, **characterized in that** an effective quantity of one of the compositions according to the invention is used for controlling insects, especially click beetles.

15. Method according to one of Claims 12 to 14, **characterized in that** the effective quantity of composition corresponds to a dose of compound of formula (I) of between 1 and 50 g/ha, preferably between 3 and 40 g/ha.

16. Method of controlling insects according to Claims 11-15 which consists in the application, over or into the soil, of a composition providing a dose which is nonlethal through contact but lethal through ingestion.

17. Method according to Claim 16, applicable to click beetles.

## Patentansprüche

1. Insektizide Zusammensetzungen, enthaltend:
a) 0,001 bis 5%, vorzugsweise 0,05 bis 1%, noch stärker bevorzugt 0,05 bis 0,5%, einer Verbindung der Formel (I) 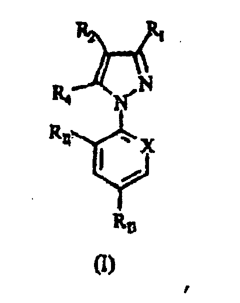 in der
R₁ ein Wasserstoffatom oder eine CN-Gruppe, eine Methylgruppe oder eine CH₃CO-Gruppe bedeutet,
R₂ S(O)ₙR₃ bedeutet,
R₃ Alkyl oder Halogenalkyl bedeutet,
R₄ ein Wasserstoff- oder Halogenatom oder einen NR₅R₆-, S(O)ₘR₇-, C(O)R₇- oder C(O)O-R₇-Rest, Alkyl, Halogenalkyl oder OR₈ oder einen -N=C(R₉)(R₁₀)-Rest darstellt,
R₅ und R₆ unabhängig das Wasserstoffatom oder einen Alkyl-, Halogenalkyl-, C(O)Alkyl- oder S(O)ᵣCF₃-Rest darstellen, oder R₅ und R₆ gemeinsam einen zweiwertigen Alkylenrest, der von ein oder zwei zweiwertigen Heteroatomen wie Sauerstoff oder Schwefel unterbrochen sein kann, bilden können,
R₇ einen Alkyl- oder Halogenalkylrest darstellt,
R₈ einen Alkyl- oder Halogenalkylrest oder ein Wasserstoffatom darstellt,
R₉ einen Alkylrest oder ein Wasserstoffatom darstellt,
R₁₀ eine Phenyl- oder Heteroarylgruppe, die gegebenenfalls durch ein oder mehrere Halogenatome oder Gruppen wie OH, -O-Alkyl, -S-Alkyl, Cyan oder Alkyl substituiert sein kann, darstellt,
X ein dreiwertiges Stickstoffatom oder einen C-R₁₂-Rest darstellt, wobei die drei anderen Valenzen des Kohlenstoffatoms Bestandteil des aromatischen Rings sind,
R₁₁ und R₁₂ unabhängig voneinander ein Wasserstoffoder Halogenatom darstellen,
R₁₃ ein Halogenatom oder eine Halogenalkyl-, Halogenalkoxy-, S(O)_{q}CF₃ oder SF₅-Gruppe darstellen,
m, n, q, r unabhängig voneinander eine ganze Zahl 0, 1 oder 2 darstellen,
unter der Bedingung daß, wenn R₁ Methyl bedeutet, R₃ Halogenalkyl, R₄ NH₂, R₁₁ Cl, R₁₃ CF₃ und X N bedeuten,
b) 0,05 bis 10%, vorzugsweise 0,1 bis 5%, eines (oder mehrerer) Feuchthaltemittel, vorzugsweise eines organischen Feuchthaltemittels, sowie
c) 40 bis 99%, vorzugsweise 50 bis 98% (stärker bevorzugt 70 bis 97%), eines pflanzlichen Mehls.

2. Insektizide Zusammensetzungen nach Anspruch 1, **dadurch gekennzeichnet, daß** die Mehle durch Mahlen von Getreidekörnern wie Weizen, Gerste, Roggen, Triticale, Hafer oder auch Reis, Sorghum, Soja oder Mais erhalten werden.

3. Insektizide Zusammensetzungen nach Anspruch 1 oder 2, **dadurch gekennzeichnet, daß** es sich bei dem Mehl um ein Maismehl handelt.

4. Insektizide Zusammensetzungen nach einem der Ansprüche 1 bis 3, **dadurch gekennzeichnet, daß** unter den organischen Feuchthaltemitteln die hydrophilen makromolekularen Derivate pflanzlichen Ursprungs, insbesondere die hydrophilen Cellulosederivate, ganz besonders Cellulose, zu nennen sind.

5. Insektizide Zusammensetzungen nach einem der Ansprüche 1 bis 4, **dadurch gekennzeichnet, daß** die Zusammensetzung 3-30%, vorzugsweise 4-20%, an Zuckern enthält.

6. Insektizide Zusammensetzungen nach einem der Ansprüche 1 bis 4, **dadurch gekennzeichnet, daß** die Zucker insbesondere aus der Gruppe der Mono-, Oligo- oder Polyorganosaccharide, speziell aus der Gruppe Saccharose, Lactose, Fructose, Dextrose, Glucose, oder auch Melasse oder Honig ausgewählt sind.

7. Insektizide Zusammensetzungen nach einem der Ansprüche 1 bis 6, **dadurch gekennzeichnet, daß** sie außerdem ein Konservierungsmittel, das den Abbau der Mehle verhindert und aus der Gruppe Natriumbenzoat, 1,2-Benzisothiazolin-3-on, Benzoesäure, para-Hydroxybenzoesäure und ihren Derivaten, Estern und Alkali- oder Erdalkalisalzen, insbesondere dem Natriumsalz, 2-Phenylphenol und seinen Alkali- oder Erdalkalisalzen, insbesondere dem Natriumsalz, sowie Paranitrophenol ausgewählt ist, enthalten.

8. Insektizide Zusammensetzungen nach einem der Ansprüche 1 bis 7, **dadurch gekennzeichnet, daß** sie weitere Zusatzstoffe wie Farbstoffe oder Attractants für die Schädlinge oder Repellants für Vögel oder Nützlinge oder zu schützende Tiere und/oder andere Formulierungsstoffe wie Klebemittel, Agglomerationsmittel, fraßfördernde Mittel, Agglutinationsmittel, Geliermittel, Treibmittel, Antihaftmittel und dergleichen enthalten.

9. Insektizide Zusammensetzungen nach einem der Ansprüche 1 bis 8, **dadurch gekennzeichnet, daß** es sich bei der Verbindung der Formel (I) um 5-Amino-3-cyan-1-[2,6-dichlor-4-(trifluormethyl)phenyl]-4-[(trifluormethyl)sulfinyl]-1*H*-pyrazol handelt.

10. Insektizide Zusammensetzungen nach einem der Ansprüche 1 bis 9, **dadurch gekennzeichnet, daß** die erfindungsgemäßen Formulierungen in Form eines Granulats vorliegen, wobei die Granulatgröße vorteilhafterweise zwischen 0,1 mm und 3 cm, vorzugsweise zwischen 0,5 und 4 mm, liegt und daß das Granulat vorteilhafterweise wasserunlöslich ist.

11. Verfahren zur Bekämpfung von Insekten, **dadurch gekennzeichnet, daß** man eine wirksame Menge einer Zusammensetzung nach einem der Ansprüche 1 bis 10 in Form eines Granulats mit einer Größe zwischen 0,2 mm und 2 cm auf oder in den Boden (vorzugsweise in den Boden) der zu bebauenden Fläche ausbringt.

12. Verfahren zum Schutz von Kulturen nach Anspruch 11, **dadurch gekennzeichnet, daß** man eine Verbindung der Formel I verwendet.

13. Verfahren nach Anspruch 11 oder 12, **dadurch gekennzeichnet, daß** man Getreidekulturen, vorzugsweise Maiskulturen, oder Zuckerrüben-, Sonnenblumen-, Kartoffel- oder Rapskulturen schützt.

14. Verfahren nach einem der Ansprüche 11 bis 13, **dadurch gekennzeichnet, daß** man zur Bekämpfung von Insekten, insbesondere von Schnellkäfern, eine wirksame Menge einer der erfindungsgemäßen Zusammensetzungen ausbringt.

15. Verfahren nach einem der Ansprüche 12 bis 14, **dadurch gekennzeichnet, daß** die wirksame Menge an Zusammensetzung einer Aufwandmenge von 1 bis 50 g/ha, vorzugsweise 3 bis 40 g/ha, der. Verbindung der Formel (I) entspricht.

16. Verfahren zur Bekämpfung von Insekten nach den Ansprüchen 11-15, bei der man auf oder in den Boden eine Zusammensetzung mit einer Aufwandmenge, die keine tödliche Kontaktwirkung, jedoch eine tödliche Fraßwirkung bewirkt, ausbringt.

17. Verfahren nach Anspruch 16 gegen Schnellkäfer.
